# EUROPEAN PATENT SPECIFICATION

(11) **EP 3 183 166 B1**
(45) Date of publication and mention of the grant of the patent: **14.10.2020**
(21) Application number: 15754190.5
(22) Date of filing: 21.08.2015
(51) Int. Cl.: B62K 7/04, B62K 19/32, B62K 21/06, F16C 19/16, F16C 19/54, F16C 35/06

(54) **HEAD TUBE FOR A BICYCLE**
STEUERKOPF FÜR EIN FAHRRAD
POTENCE POUR UNE BICYCLETTE

(30) Priority: 22.08.2014 EP 14181996
(43) Date of publication of application: 28.06.2017
(73) Proprietor: Larry VS Harry ApS, 1361 Kobenhavn K (DK)
(72) Inventor: MALMBORG, Lars Henrik, 1610 København V (DK); FOGH, Hans Bullitt, 1361 København K (DK)
(74) Representative: Chas. Hude A/S
(86) International application number: PCT/EP2015/069204
(87) International publication number: WO 2016/026950

(56) References cited:
- EP-A1- 0 520 383
- DE-U1-202014 005 627

## Description

### [FIELD OF THE INVENTION]

The present invention relates to a head tube for a bicycle, a bicycle frame and a bicycle for providing a coupling between a bicycle frame and a wheel of the bicycle, where the tube comprises a central axis comprising a first bearing having a first diameter a second bearing having a second diameter where the first bearing and/or the second bearing are adapted to provide a rotation around the central axis of the tube.

### [BACKGROUND]

In urban environments, and especially in cities, there is a constant increase in motorised vehicles that take up space in the urban environment. The increase in motorised vehicles is primarily an increase in cars, trucks and other types of motorised vehicles that utilise the road network. The increase means that there is increased traffic which means that travel time is increased when traffic is bad, as well as increased air pollution to the urban environment.

The increased traffic, and the problems relating to the increased number of cars, has increased the use of bicycles in the urban environment, as it may often be faster to get from point A to point B on a bicycle than in a car. There have previously been a number of situations where a bicycle is not a viable option, e.g. when there are more than one person (a parent with one or more children) travelling on a single vehicle or when there are goods to be moved from point A to point B.

This problem has previously been solved by using carrier bikes, in the form of three wheeled bikes that have a load bed positioned between two front wheels, i.e. a cargo tricycle such as that disclosed in DK 2003 001289. A cargo tricycle is a very stable cycle, that may be used to carry a large load. However, tricycles are heavy and are wide compared to a bicycle, which means that it may be difficult to manoeuvre the tricycle in the urban environment.

One solution to this problem has been provided in form of the "long-john" type bicycle, where a load bed is positioned between the front and the back wheel of a bicycle. One type of such a bicycle is shown in DK 2008 00429, where the bicycle is provided with a down tube that splits into two parts from the seat tube and gathers by the head tube to define a load bed that has a low centre of gravity. Such types of bikes are quite useful, as they are easier to manoeuvre than tricycles, especially when accelerating, decelerating and maintaining a momentum of travel. A further advantage is that such a bicycle is much smaller in width than a tricycle, and does therefore not take as much space on small bicycle paths and on the road as a wide three-wheeled cargo bicycle.

Such two wheeled load carrying bicycles are however quite long, as the front wheel is positioned in front of the load bed, which means that the bikes may be difficult to handle when there are tight turns in the urban environment.

EP 0 520 383 discloses a headset for rotatably attaching a fork stem to a head pipe of a frame of a bicycle or the like. The headset includes an inner tube fitted on an outer surface of the fork stem, an outer tube coaxially surrounding the inner tube and fitted in an inner surface of the head pipe, and a ball bearing mounted between the inner tube and outer tube for allowing relative rotation around an axis thereof and restricting relative axial movement between the inner tube and the outer tube. The inner tube, outer tube and ball bearing are assembled into an integral unit attachable to and detachable from the head pipe and fork stem.

Other types of cargo bikes may be cargo bikes where the load bed is positioned above the front and/or the back wheel of a bicycle, such as a Monark Truck bike, From Exercise AB in Sweden. When the load bed is arranged over the front wheel of the bike, the back end of the load bed is delimited by the head tube holding the fork, while the front of the load bed is delimited by the ultimate position of the front wheel of the bicycle in order to prevent the load bed from being arranged in front of the front wheel in order to reduce the risk that the bicycle can tip over via the front wheel. Thus, such a bicycle has a very limited configuration for a load bed as the load bed is both limited in width and/or length in a direction parallel to the central axis of the bicycle.

Furthermore, when a load bed is arranged above the front wheel of a bicycle there are a few issues related to the design of the bicycle that provide drawbacks to the current design. The positioning of the head tube, holding the front wheel fork, may be seen as a delimiting factor, where the height of the load bed from the ground is defined by the diameter of the front wheel and the height of the head tube, in order to ensure that the head tube does not extend into the area of the load bed and limit the cargo space, when the front wheel fork is substantially vertical or slightly tilted. Thus, when a bicycle of the aforementioned kind is provided having a large front wheel, the height of the load bed is in such a manner that the centre of gravity of the bicycle is raised, and causing the bicycle to be unstable both during travel and standstill, especially when the load bed is loaded with cargo.

Furthermore, such a conventional bicycle having a load bed arranged above the front wheel, may mean that the handle bars have to be raised so that the handle bars do not hit the load bed during turns. An increased height also provides an increased wind resistance, where the wind resistance may a combination of the high load bed, but also the sitting position of the user/rider as the sitting position must be upright.

The ride comfort and stability of a bicycle is highly dependent on the size of the front wheel, where a front wheel having a small diameter reduces the ride comfort (compared to a larger front wheel). Thus, should the bicycle be provided with a smaller diameter front wheel in order to increase stability of the bicycle, the ride comfort may be compromised.

Thus there is a need to improve a carrier bicycle, having the load bed above the front wheel, where the height of the load bed may be relatively low without compromising the ride comfort.

### [GENERAL DESCRIPTION]

In accordance with the invention, there is provided a head tube for a bicycle for providing a coupling between a bicycle frame and a wheel of the bicycle, where the head tube comprises a central axis where the head tube comprises: a tubular section comprising a first end and a second end, a first bearing having a first diameter, a second bearing having a second diameter, where the first bearing and/or the second bearing are adapted to provide a rotation around the central axis of the tube, where the first bearing is arranged in a first position in a direction along the fixed axis where the first position is closer to the first end than the second end and the second bearing is arranged in a second position in a direction along the fixed axis where the second position is closer to the second end that the first end, wherein the size of the first and/or second diameter is larger than the distance from the first position of the first bearing to the second position of the second bearing.

By providing a head tube in accordance with the invention it is possible to provide a head tube that is significantly smaller in its vertical dimension, while still maintaining a secure coupling between the bicycle frame and the wheel of the bicycle. Thus, the wheel of the bicycle is capable of being rotated across a fixed axis, i.e. the central axis of the tube, and the bearings are of such a size that the bearings can withstand the forces transmitted from the ground, via the wheel and into the head tube.

The force applied into the head tube is distributed on the front side of the lower bearing and the back side of the upper bearing, (in the direction of travel) when the wheels of the bicycle are in contact with the ground. Traditionally, the upper and lower bearings have been positioned at a large distance from each other in order to increase the length of the fulcrum between the upper and lower bearings, in order to ensure that the forces are not too high to distribute the load along the entire height of the head tube and to reduce wear and tear to ensure stability.

However, by increasing the diameter of the bearings and reducing the distance between the upper and the lower bearing, it is possible to distribute the forces into the head tube, as the larger bearings have an increased amount of bearing balls which results in a larger contact surface with the head tube, and thereby reduces wear and tear. Thus, by having bearings that have a larger diameter than the distance between the upper and lower bearing, it is possible to reduce the height of the head tube significantly, without reducing the stability and the durability of the head tube.

Thus, such a head tube having a reduced height may be positioned beneath a load bed of a bicycle, where there is enough space in the longitudinal direction and the transverse direction for the larger diameter of the bearings and the reduced length between the two bearings ensures that the top of the head tube does not intersect the load bed and the bottom of the head tube does not extend significantly downwards towards the wheel.

By positioning the first bearing close to the first end and the second bearing close to the second end, it is possible to reduce the length of the head tube, as the bearings are positioned in close proximity to the ends. The closeness of the bearings to the ends and the distance between the bearings means that the tubular section may be relatively short while having a large diameter, compared to conventional head tubes. Thus, the vertical size of the head tube, i.e. the height, may be reduced significantly, which may be advantageous to lower the centre of gravity of a bicycle.

Thus it is possible to provide a bicycle having a load bed, where the head tube and the wheel may be placed directly below the load bed, so that the front part of the bicycle may be the tip of the load bed, without risking that the bicycle will tip over. Thus the load may be distributed evenly onto the wheel beneath the load bed. Furthermore, the reduced height of the head tube, compared to traditional head tubes, ensures that bottom of the head tube does not extend significantly downwards, which ensures that the size of the wheel and/or a fork for the wheel may be kept as large as possible, and this may determine the height of the load bed from the ground.

Thus, it is possible to provide a cargo bicycle that is provided with a load bed in front of the cyclist, where the height of the load bed can be reduced to increase stability and balance of the bicycle and where the total length of the bicycle may be reduced, as it is not necessary to provide the wheel in front of the load bed, and thereby having a more manoeuvrable load carrying bicycle.

Within the meaning of the invention, the term closer to one part than another means that the physical positioning of an item is physically closer to one part than the other. This means that the distance from the item to the one part is shorter than the distance from the item to the other part. The distance may be measured from e.g. a centre point, peripheral edges or other parts, and such measurements should be well understood by the person skilled in the art.

The ends of the tubular member may be seen as the terminal first edge or the terminal second edge of the tubular member.

In accordance with the invention the bearing may be a plain bearing, sleeve bearing, rifle bearing, ball bearing, roller bearing, jewel bearing, fluid bearing, needle roller bearing.

In one embodiment the first diameter and the second diameter may be substantially equal. By having the first and the second bearing of the same diameter it is possible to create a stable coupling between the wheel and the bicycle frame, as well as increase the likelihood that the two bearings will have an equal amount of wear and tear.

In one embodiment the first diameter and the second diameter may be different. The lower bearing may be provided with a bearing that has a diameter that is larger than the upper bearing, i.e. that the first diameter is smaller than the second diameter. It is usual in head tube designs to have a larger bearing below, as this bearing has to withstand larger forces than the upper bearing, where the lower bearing has to withstand the weight of the bicycle, user and load, as well as rotational forces, while the upper bearing mainly has to withstand the moment or torque about the fulcrum, which is the lower bearing. However, as the distance between the lower bearing and the upper bearing is reduced, the moment or torque is increased and may require a strong bearing, having a large diameter. It is however usual that the upper bearing is not larger than the lower bearing, even though this may well be envisioned in accordance with the present invention.

In one embodiment the ratio between the size of the first and/or the second diameter and the distance from the first position to the second position may be between 15:1 and 2:1, more preferably between 13:1 and 4:1, more preferably between 11:1 and 6:1, or more preferably between 10:1 and 8:1, or more preferably about 9:1. Depending on the type of bicycle the head tube is to be utilized with, the ratio between the width and the distance may be varied where the main importance is that the width is larger than the distance between the two bearings. In smaller bicycles, where the load capacity is not intended to be excessive and the height of the bicycle is not a critical issue, the load may be carried by two or more head tubes (i.e. a tricycle) or a load bed that has vertical space that is not compromised, it is possible to provide a ratio that is relatively low, i.e. 2:1, 4:1 or 6:1. Thus, the head tube may still be kept lower than traditional head tubes. A preferred ratio is approximately 9:1, as this provides good stability and a significant surface area for the bearings to contact the inner surface of the head tube and the outer surface of a fork. In accordance with the invention, a larger ratio may also be utilized, e.g. 15:1, in case the load on the bicycle is intended to be significant, and where it may be helpful to have a head tube that has a very small vertical dimension.

The diameter of the bearings may be defined as the size of the bearing from the outer or inner periphery of the bearings or the cross dimensional centre of the bearing balls, i.e. between the outer or inner periphery of the bearings. Furthermore, distance between the bearings may be defined as the distance between the cross dimensional centre of the bearing balls, from the upper periphery of the bearings, the lower periphery of the bearings or a combination of the two. A preferred method of assessing the distance and/or the diameter is from the cross dimensional centre of the bearing balls.

The bearings in accordance with the invention may be any kind of bearing, a ball bearing, needle bearing, spherical roller bearing, etc., provided that the bearing is capable of providing rotational movement.

In one embodiment an outer periphery of the first and/or the second bearing may be fixed relative to the tube and an inner periphery of the first and/or second bearing is rotatable relative to the tube around the central axis of the tube. The inner periphery of the bearings may be attached to a steering fork, where an outer surface of the steering fork is adapted to receive the inner periphery of the bearings, so that the fork and the inner periphery of the bearing do not move relative to each other. The outer periphery of the bearing may be attached to an inner surface of the head tube that may be adapted to receive the bearing, so that the two are substantially immovable relative to each other during use. The attachment may be a frictional attachment, or the head tube and/or the steering may be provided with upper and lower retaining means to ensure that the bearings cannot move relative to the head tube or the fork during use. Other methods for attaching the bearings to the head tube and/or the fork may be foreseen by the person skilled in the art. Alternatively the inner periphery of the bearing may be attached to a wheel suspension, or other means of providing steering to a wheel of a vehicle.

In one embodiment the central axis of the tube may be tilted at an angle α from vertical so that the plane of the first and/or second bearing is adapted to intersect a horizontal plane of the bicycle. Such an angle may be seen as a caster angle, a castor angle or a steering axis angle. By tilting the central axis of the tube it is possible to obtain a self-centering action of the steering, when the steering of the bicycle is done via the wheel that is coupled to the bicycle frame, either in the front of the bicycle or the back of the bicycle. This assists the bicycle in maintaining a straight line stability. By tilting the central axis of the tube, it is possible to lower one side of the head tube while maintaining the other in the upper position. Thus the rotation of the wheel via the head tube is performed at an angle, and an imaginary plane, parallel to the plane of the bearings may be adapted to be seen as being able to intersect the horizontal plane of the bicycle and/or the plane of the load bed. The tilting of the central axis ensures that the centre of the wheel is tilted away from the rotational axis, which reduces the risk that the wheel may inadvertently turn causing the bicycle rider to lose balance and crash.

In one embodiment the angle α may be between 1 and 90 degrees from vertical, more preferably between 10 and 25 degrees from vertical, more preferably between 15 and 20 degrees from vertical, more preferably between 18 and 19 degrees from vertical, or approximately 18,5 degrees from vertical. The specific angle may be combined with a curved fork, so that the effective steering axis angle, may be increased or decreased using a steering fork that may position the rotational axis of the wheel away from the longitudinal axis (centre axis) of the head tube. Thus, the angle α may either be the angle of the head tube, a combination of the angle of the head tube and a curved steering fork, or an offset axle, using a bracket on a straight steering fork. The typical offset is approximately 30-40 mm for a 20" wheel.

In one embodiment the head tube may comprise a first connecting part and a second connecting part adapted to connect the head tube to a bicycle frame. By utilizing two connecting parts to connect the head tube to the bicycle frame the head tube may be attached securely to the bicycle frame, allowing the two connecting parts to ensure an optimal rigidity between the head tube and the bicycle frame, and thereby providing an optimal rigidity between the bicycle frame and the wheel. This may further be achieved by adding a third and subsequent connecting parts, in order to provide increased rigidity.

In one embodiment the head tube may comprise a first connecting part, where the first connecting part is adapted to connect the head tube to a bicycle frame. The first connecting part may be single weld or bracket that may be connected over a large surface area to the bicycle frame. A single connecting part may be a sheet having a first end that surrounds parts of the head tube and a second end that connects to the bicycle frame.

In one embodiment the first connecting part and the second connecting part may be arranged on opposite sides of the head tube. It may be advantageous when dealing with a carrier bicycle that, in order to save vertical space in the volume surrounding the head tube, the connecting parts are arranged on opposite sides of the head tube. Thus, it is possible to provide the head tube with a secure connection to the bicycle frame, where torsion of the head tube is minimized across at least one axis that is transverse to the longitudinal axis of the frames, i.e. an axis that is substantially parallel to the connecting parts, when the head tube is provided with a load. Furthermore, by constructing the connecting parts in such a manner that the connecting parts are capable of withstanding torsion of the head tube in other directions, i.e. by having the connecting parts in the form of an H-beam, I-beam, box beam or similar beams that are capable of withstanding compression or tension forces in more than one direction, it may be possible to reduce the risk that the head tube is capable of flexing relative to the bicycle frame, when forces are applied that are normal and/or expected to be applied to the bicycle and/or the bicycle frame. Thus, by having the connecting parts on the opposite sides, where the connecting parts may be directed in a radial direction from the central axis of the head tube, the connection does not intersect the load bed (when the head tube is below a load bed) or does not intersect with the wheel of the bicycle, and thereby reducing the vertical space required to optimize the height, balance and stability of the bicycle. This means that the head tube may be connected to the bicycle frame by connecting means that may be located on opposite transverse sides of the longitudinal axis of the bicycle frame, or may be located on opposite longitudinal sides, parallel to the longitudinal axis of the bicycle frame, or any direction between the transverse or longitudinal sides, i.e. in a diagonal direction.

In one embodiment the first connecting part may extend in a radial direction from the central axis of the head tube and where the second connecting part may extend in a different radial direction from the central axis, allowing the head tube to be connected on two different radial sides of the head tube to a bicycle frame. The connecting parts may be arranged in different ways to connect the head tube to a bicycle frame. The connecting parts may be arranged at an angle to each other in the same plane, allowing the head tube to extend in a direction away from the connecting area of the bicycle frame. This may be utilized if the load bed is not part of the frame, and may be removed. Thus, the head tube may be connected to the bicycle frame, allowing the head tube to be securely attached to the frame, and where a load bed or other types of elements may be positioned on top of the head tube, so that the head tube does not reduce the vertical space needed to position the elements on the bicycle frame, and thereby allowing the centre of gravity to be positioned lower than with conventional head tubes.

In accordance with the invention, there may also be provided a headset assembly comprising a head tube, where the headset assembly may comprise a steering fork assembly, where a proximal part of the steering fork assembly is coupled to the first and/or second bearing and a distal part of the steering fork assembly is adapted to be attached to a wheel. The headset assembly may be utilised to provide steering to a bicycle, where the steering fork is capable of rotating relative to the head tube and thereby allowing the steering wheel to be turned relative to the head tube.

In accordance with the invention, there may also be provided a bicycle frame having a head tube wherein the bicycle frame is a carrier bicycle frame having a central axis and comprises a load bed that intercepts an axis that is parallel to the central axis of the head tube. Thus, the head tube may be positioned in such a manner that the axis intercepts the load bed, i.e. by arranging the head tube below the load bed. Thus, the head tube may be positioned in such a manner that the head tube reduces the vertical space needed by the head tube to be arranged between the bicycle frame and the steering fork, allowing so that the head tube does not reduce the volume of the load bed and allows for a large wheel below the head tube.

In one embodiment the bicycle may comprise a main (down) tube that extends from a crank box adapted to receive pedals and is divided into a first main tube and a second main tube that extend outwards in opposite transverse directions from the central axis of where the first and second main tubes that defines the load bed in a direction towards a front of the bicycle frame. Such a bicycle frame is stable in the area between the load bed and the back of the frame, which means that the load bed is substantially rigidly attached to the back of the frame, where the user is adapted to be positioned on the bicycle frame during use.

In one embodiment the head tube may be attached in a transverse direction to the first main tube and the second main tube so that the head tube is positioned between the first main tube and the second main tube. Thus it is possible to position a steering wheel that is attached to the head tube in a volume which is below the load bed of the bicycle. Thus, the head tube does not reduce the volume of the load bed, and it does not reduce the volume below the load bed, allowing the size of the wheel to be optimized for stability and balance of the bicycle, while maintaining a good ride comfort.

In one embodiment the bicycle frame may comprise a steering tube adapted to receive a steering means, where the steering tube is offset along the central axis in relation to the head tube, and where the steering means is adapted to be connected to the wheel via a mechanical linkage. Thus, the head tube may be positioned in front of or behind the steering tube, allowing the distance between the front and the back wheel of the bicycle to be positioned at an optimal distance from each other, in order to improve the ride comfort and the stability of the bicycle. Thus, the user does not have to stretch forward in order to steer the bicycle, but the steering tube may be positioned anywhere on the bicycle frame, providing an optimal distance between the user and the handle bars of the bicycle.

### [BRIEF DESCRIPTION OF DRAWINGS]

The invention is explained in detail below with reference to the drawings, in which
Fig. 1 is a perspective view from above of a carrier bicycle having a head tube according to the invention,
Fig. 2 is an exploded perspective view of a head tube and a steering fork in accordance with the invention,
Fig. 3 is a sectional side view of an assembled head tube and steering fork taken along the axis III-III of Fig. 2,
Fig. 4 is a sectional side view of a bicycle frame having a cranium tube according to the invention taken along the axis IV-IV of Fig. 1,
Fig 5 is perspective view of an alternative carrier bicycle having a head tube according to the invention,
Fig 6 is perspective view of an alternative carrier bicycle having a head tube according to the invention,
Fig. 7 is a cross sectional view of a bearing, and
Fig. 8 is the view taken in the area VIII of Fig. 7.

### [DETAILED DESCRIPTION OF DRAWINGS]

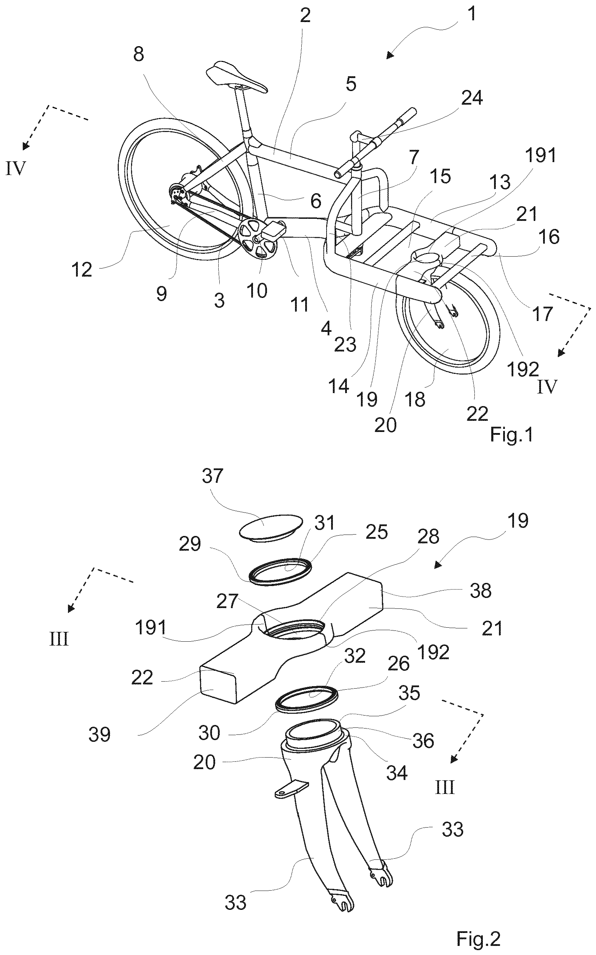

Fig. 1 shows a perspective view from above of a carrier bicycle 1, having a bicycle frame 2, where the bicycle frame 2 comprises a main tube 4 (down tube), a top tube 5, a seat tube 6, a steering tube 7, seat stays 8, and chain stays 9. The seat tube 6 and the main tube 4 are attached to a bracket shell, where the bracket shell is utilized to hold the crank arms 10 and the pedals 11, to provide driving force via a chain 3 to the back wheel 12.

The bicycle frame 2 comprises a main tube 4 which is divided into a first side tube 13 and a second side tube 14, where the first side tube 13 and the second side tube 14 pass on either side of the steering tube 7, in order to comprise a load bed 15, which is positioned in front of the steering tube 7. The lower boundary of the load bed 15 may be seen as being between the first side tube 13 and the second side tube 14. The load bed may further be defined by one or more support bars 16 that extend between the first side tube 13 and the second side tube 14. The first side tube13 and the second side tubes 14 may in a forward direction meet at the front end 17 of the bicycle frame 2 in order to provide a forward boundary for the load bed 15. The aft boundary for the load bed may be defined as the area where the main tube 4 divides into the two side tubes 13, 14 or in an area in front of the steering tube 7. The rigidity of the bicycle frame 2 may be increased by providing support tubes 23 that may be adapted to prevent torsion between the side tubes 13, 14 and the steering tube 7.

A conventional carrier bike would be provided with a head tube in extension of the steering tube, which would mean that the front wheel of the bicycle would be positioned under the steering tube or below the aft boundary of the load bed. Such an arrangement would be very unstable as a load in the load bed could cause the front wheel to be a fulcrum between the front and the back of the bicycle, and could cause the bicycle to tip over via the front wheel, if the load to the back is lower than the load to the front.

Thus, in order to provide a stable carrier bicycle frame it is advantageous to move the front wheel 18 in a direction towards the front of the bicycle frame 2 and the load bed 15 in order to increase stability, without having the front wheel 18 positioned in front of the load bed of the carrier bicycle 1 causing the bicycle 1 to be excessively long.

Therefore, the bicycle frame 2 may be provided with a head tube 19 that is capable of holding a steering fork 20 which is adapted to hold the front wheel 18 of the bicycle 1. The head tube 19, may be in the form of a tubular member having a first end 191 and a second end 192, where the tubular member has a first opening in the first end 191, which allows access from above to the tubular member and a second opening in the second end 192, which provides access to the tubular member from below. The second opening may be utilized to insert the steering fork 20 into the head tube and the tubular member. The head tube 19 may be positioned directly below the lower boundary of the load bed 15, and may be positioned in a vertical and transverse position between the first side tube 13 and the second side tube 14, so that the head tube 19 does not extend into the load bed 15 and therefore does not reduce the volume of the load bed 15. The head tube 19 may be attached to the side tubes via a first 21 and a second transverse connecting beam 22. The steering fork 20 may be connected to the steering tube 7 and the handle bars via a mechanical linkage (not shown), which transfers rotational movement of the handle bars 24 to the steering fork 20.

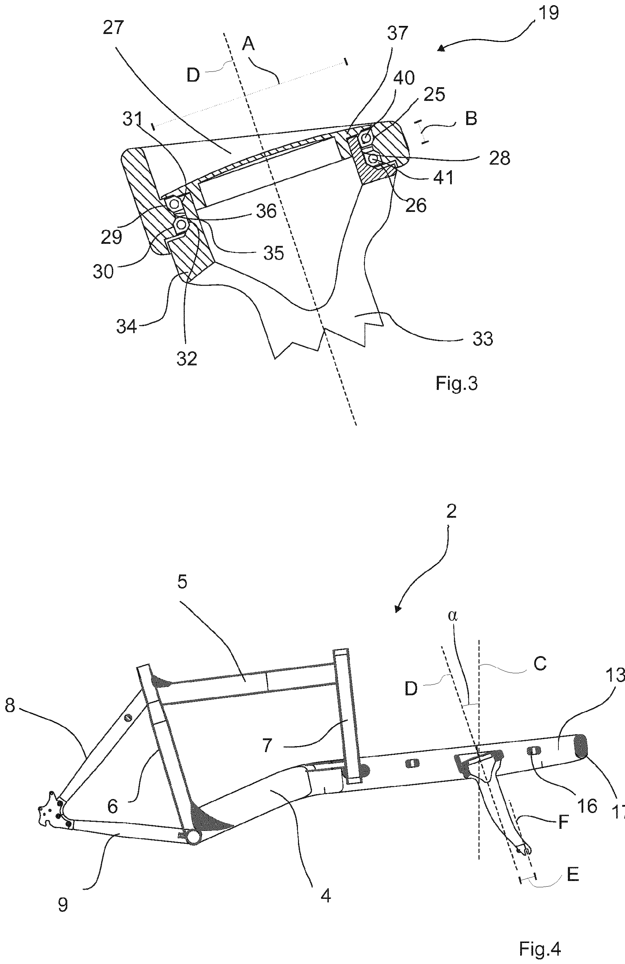

Fig. 2 shows an exploded view of the head tube 19, where the head tube 19 comprises a first bearing 25 (upper bearing) and a second bearing 26 (lower bearing) where the first 25 and the second bearings 26 are positioned inside the opening 27 in the head tube 19 at a predetermined distance from each other (as shown in Fig. 3). The outer periphery 29, 30 of the first 25 and the second bearings 26 are attached to the inner surface 28 of the opening, allowing the inner periphery 31, 32 of the bearings to rotate relative to the outer periphery 29, 30 and the inner surface 28 of the head tube 19.

The steering fork 20, comprises two blades 33 that allow the wheel to be positioned between the blades. The blades 33 are joined at the top by a fork crown 34, where a steerer tube 35 is attached to the fork crown 34. The outer surface 36 of the steerer tube 35 is attached to the inner periphery 31,32 of the bearings 25,26, so that the rotational movement of the bearings 25,26 may be transferred to the steering fork 20, when the bearings are arranged in the head tube 19. The head tube 19 may further be provided with a closure 37, which is adapted to protect the inner mechanism of the head tube to be protected from the environment.

The head tube 19 may be provided with connecting means 21, 22 that are positioned on opposite sides of the head tube 19, where the distal ends 38, 39 of the connecting means may be adapted to attach the head tube to the bicycle frame 2 in a transverse direction as shown in Fig. 1 or alternatively in a longitudinal or diagonal direction.

Fig. 3 shows a sectional view of the head tube 19 or the headset assembly taken along axis III-III from Fig. 2, where the outer surface 29, 30 of the first and second bearings 25, 26 is in contact with the inner surface 28 of the head tube 19. The inner periphery 31, 32 of the bearings 25,26 is in contact with the outer surface 36 of the steerer 35. Between the inner and outer surface, the first 25 and second 26 bearings comprise a first set of bearing balls 40 and a second set of bearing balls 41 that are distributed inside the bearings 25,26 annularly, allowing the rotation of the bearings to be done relatively frictionless. Fig. 3 shows that the bearings 25,26 have a diameter A, which represents the annular size of the bearings, where in this case the diameter A extends from a centre of the bearing balls 40, 41 to the centre of the bearing balls 40, 41 on the opposite side of the bearing. The distance B between the first bearing 25 and the second bearing 26 may also be from the centre of the bearing ball 40 to the centre of the bearing ball 41. The distance may also be represented from the upper periphery of the bearings, the lower periphery of the bearings, from the upper periphery of the first bearing 25 and the lower periphery of the second bearing. The important feature is that the bearings are positioned close to each other in the direction of the central axis D.

Fig. 4 shows a sectional view of the bicycle frame 2 shown in Fig. 1. The head tube 19 is arranged to be attached to the side tube 13 using the connection means 21 shown in Fig. 1. A vertical axis C which is perpendicular to horizontal is used to show how the central axis D of the head tube is angled at an angle α. The steering fork 20 may further be bent, so that the dropout of the blade 33 is offset from the centre axis D of the head tube 19 in order to increase the steering axis angle, where the offset distance E is shown using the axis E.

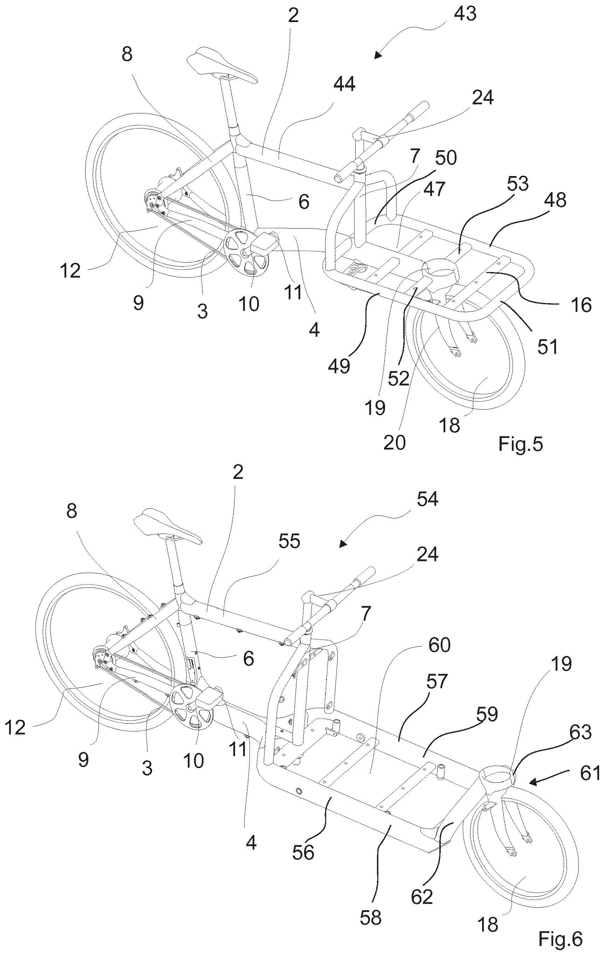

Fig. 5 shows a perspective view of a bicycle 43, having a traditional bicycle frame 44, where the down tube 4 of the bicycle extends as a single unit forward, where the free end 46 of the forward part 45 of the down tube 4 is connected to a head tube 19 in accordance with the invention. The bicycle frame 44 is further provided with a load bed, 47, comprising a first side tube 48 and a second side tube 49 that define the peripheral edges and the forward 50 and back edges 51 of the load bed 47. The load bed may be provided with support bars 16 that defined the bottom of the load bed 47. In this manner, the head tube 19 is adapted to be positioned below the load bed 47, and where the limited height of the head tube ensures that the volume of the load bed 47 is maintained as large as possible, where the head tube does not extend into the volume. In this manner, the head tube 19 may be firmly attached to the free end 16, where any load applied to the head tube is transferred into the head tube. Further support bars 52, 53 may be provided to increase the rigidity between the head tube and the bicycle frame.

Fig. 6 shows a perspective view of a bicycle 54, having a bicycle frame 55 similar to that disclosed in DK 2008 00429, where the head tube 19 in accordance with the invention has been replaced with the traditional head tube shown in the prior art. This type of frame is especially advantageous as the frame allows for a very low centre of gravity as the load bed is between the front wheel and the back wheel. The bicycle frame 55, is provided with a down tube 4, that is split into two parallel parts 56, 57, that extend radially outwards from the central axis of the bicycle frame, into a first side tube 58 and a second side tube 59, where the side tubes define the peripheral edges of the load 60 of the bicycle frame 55. The side tubes 58, 59 are bent towards each other at the front end 61 of the bicycle frame 55, where a first forward side tube 62 and a second forward side tube, extend inwards and in a horizontal direction where they are joined at the head tube 19, where the forward side tubes are connected to the head tube 19, and where the forward side tubes define the forward periphery of the load 60. Thus, by providing the traditional bicycle frame 55 with a head tube in accordance with the invention, the head tube does not extend into the volume of the load bed, and therefore allows a larger load to be introduced into the load bed, without raising the load bed, and thus maintaining the low centre of gravity of the bicycle 54.

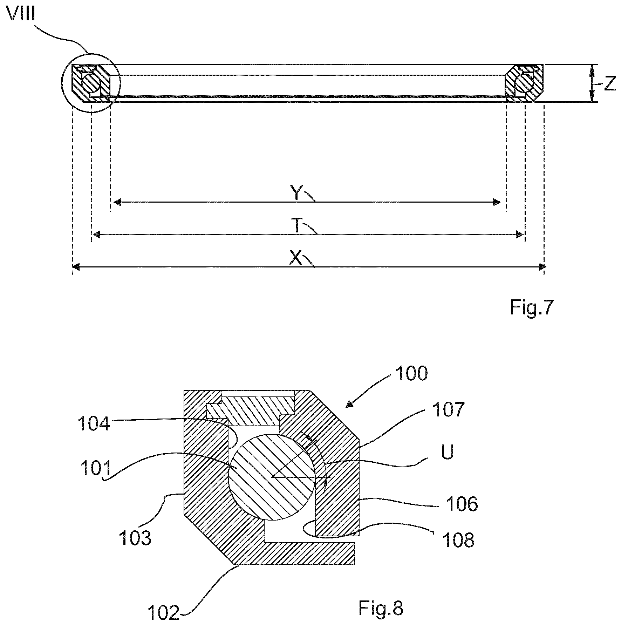

Fig. 7 is a cross sectional drawing of a bearing, where the height of the bearing is defined as Z and the outer diameter of the bearing is defined as X, the inner diameter is defined as Y, and the centre diameter is defined as T. In one example Z may be 8 mm, X may be 100mm, Y may be 84 mm and T may be 92mm. Thus the inner diameter of the head tube must be approximately 100 mm, or equal to that of the outer diameter X of the bearing.

Fig. 8 shows a cross sectional drawing of one side of a bearing, taken from area VIII in Fig. 7. The bearing 100 is a ball bearing, having a bearing ball 101 and where the outer ring 102 has an outer surface 103 and an inner surface 104, where the outer surface is adapted to be mounted to a head tube and the inner surface is adapted to be in contact with the bearing ball 101. The inner ring 106 has an outer surface 107 and an inner surface 108, where the outer surface of the inner ring 106 is adapted to be attached to a rotating steering means. Thus, the inner ring and the outer ring may rotate relative to each other, where the bearing ball ensures that the rotation achieves to be frictionless. In order to withstand diagonal forces, the inner surfaces of the rings 102 and 106 may be angled at an angle U, which in this case is approximately 40 degrees from horizontal.

In an alternative example which does not form part of the claimed invention, a head tube for a bicycle for providing a coupling between a bicycle frame and a wheel of the bicycle, where the tube comprises a central axis comprising
- a first bearing having a first diameter,
- where the first bearing is adapted to provide a rotation around the central axis of the tube,
- where the first bearing is arranged in a first position in a direction along the fixed axis,
- where the head tube has a width that is larger than the first diameter, and where the head tube has a height (along the rotational axis) that is smaller than the width of the head tube.

Thus it is possible to obtain a similar head tube, where there it is only necessary to have a single bearing.

## Claims

1. A head tube (19) for a bicycle (43) for providing a coupling between a bicycle frame (44) and a wheel (18) of the bicycle (43), where the head tube (19) comprises a central axis (D), where the head tube comprises
- a tubular member comprising a terminal first edge and a terminal second edge
- a first bearing (25) having a first diameter (A),
- a second bearing (26) having a second diameter (A),
- where the first bearing (25) and the second bearing (26) are adapted to provide a rotation around the central axis (D) of the head tube (19),
- where the first bearing (25) is arranged in a first position in a direction along the central axis (D) where the first position is closer to the terminal first edge than the terminal second edge and the second bearing (26) is arranged in a second position in a direction along the central axis (D) where the second position is closer to the terminal second edge than the terminal first edge,
- **characterised in that** the size of the first and/or second diameter (A) is larger than the distance from the first position of the first bearing (25) to the second position of the second bearing (26).

2. A head tube (19) according to claim 1, wherein the first diameter (A) and the second diameter (A) are substantially equal.

3. A head tube (19) according to any of the preceding claims, wherein the ratio between the size of the first and/or the second diameter (A) and the distance from the first position to the second position is between 15:1 and 2:1, more preferably between 13:1 and 4:1, more preferably between 11:1 and 6:1, or more preferably between 10:1 and 8:1 or more preferably about 9:1.

4. A head tube (19) according to any of the preceding claims, wherein an outer periphery (29, 30) of the first and/or the second bearing (25, 26) is fixed relative to the tubular member and an inner periphery (31, 32) of the first and/or second bearing (25, 26) is rotatable relative to the tubular member around the central axis (D) of the head tube (D).

5. A head tube (19) according to any of the preceding claims, wherein the central axis (D) of the head tube (19) when mounted on a bicycle frame (44) is tilted at an angle α from vertical (C) so that the plane of the first and/or second bearing (25, 26) is adapted to intersect a horizontal plane of a bicycle frame (44).

6. A head tube (19) according to claim 5 wherein the angle α is between 1 and 90 degrees from vertical, more preferably between 10 and 25 degrees from vertical, more preferably between 15 and 20 degrees from vertical, more preferably between 18 and 19 degrees from vertical, or approximately 18,5 degrees from vertical.

7. A head tube (19) according to any of the preceding claims, wherein the head tube (19) comprises a first connecting part (21) and a second connecting part (22) adapted to connect the head tube to a bicycle frame (44).

8. A head tube (19) according to claim 7, wherein the first connecting part (21) and the second connecting part (22) are arranged on opposite sides of the head tube (19).

9. A head tube (19) according to claim 7 or 8, wherein the first connecting part (21) extends in a radial direction from the central axis (D) of the head tube (19), and where the second connecting part (22) extends in a different radial direction from the central axis (D), allowing the head tube (19) to be connected on two different radial sides of the head tube (19) to a bicycle frame (44).

10. A bicycle headset assembly comprising a head tube (19) according to claims 1 - 9, wherein the headset assembly further comprises a steering fork assembly, where a proximal part of the steering fork assembly is coupled to the first and/or second bearing (25, 26) and a distal part of the steering fork assembly is adapted to be attached to a wheel (18).

11. A bicycle frame (44) comprising the head tube (19) in accordance with claims 1 - 9, wherein the bicycle frame (44) is a cargo bicycle frame having a central axis and comprises a load bed (47) that intercepts an axis that is parallel to the central axis (D) of the head tube (19).

12. A bicycle frame (44) in accordance with claim 11, wherein the bicycle frame (44) comprises a main tube (4) that extends from a crank box adapted to receive pedals (11) and is divided into a first main tube (13) and a second main tube (14) that extend outwards in opposite transverse directions from the central axis of the bicycle frame (44), where the first and second main tubes defines the load bed (15) in a direction towards a front of the bicycle frame (44).

13. A bicycle frame (44) in accordance with claim 12, wherein the head tube (19) is attached in a transverse direction to the first main tube (13) and the second main tube (14) so that the head tube is positioned between the first main tube (13) and the second main tube (14).

14. A bicycle frame (44) in accordance with claims 11 - 13, wherein the bicycle frame (44) comprises a steering tube (7) adapted to receive a steering means, where the steering tube (7) is offset along the central axis of the bicycle frame (43) in relation to the head tube (19), and where the steering means is adapted to be connected to the wheel (18) via a mechanical linkage.

## Patentansprüche

1. Ein Steuerrohr (19) für ein Fahrrad (43) zur Bereitstellung einer Kupplung zwischen dem Fahrradrahmen (44) und einem Rad (18) des Fahrrads (43), wobei das Steuerrohr (19) eine zentrale Achse (D) umfasst, wobei das Steuerrohr umfasst:
- ein röhrenförmiges Element, umfassend eine terminale erstes Kante und eine terminale zweite Kante
- ein erstes Lager (25) mit einem ersten Durchmesser (A),
- ein zweites Lager (26) mit einem zweiten Durchmesser (A),
- wobei das erste Lager (25) und das zweite Lager (26) angepasst sind, um eine Drehung um die zentrale Achse (D) des Steuerrohrs (19) bereitzustellen,
- wobei das erste Lager (25) in einer ersten Position in einer Richtung entlang der zentralen Achse (D) angeordnet ist, wobei die erste Position näher an der ersten terminalen Kante ist als an der zweiten terminalen Kante, und
das zweite Lager (26) in einer zweiten Position in einer Richtung entlang der zentralen Achse (D) angeordnet ist, wobei die zweite Position näher an der zweiten terminalen Kante ist als an der ersten terminalen Kante,
- **dadurch charakterisiert,** dass die Größe des ersten und/ oder zweiten Durchmessers (A) größer ist als die Distanz von der ersten Position des ersten Lagers (25) zu der zweiten Position des zweiten Lagers (26).

2. Ein Steuerrohr (19) nach Anspruch 1, wobei der erste Durchmesser (A) und der zweite Durchmesser (A) im Wesentlichen gleich sind.

3. Ein Steuerrohr (19) nach einem der vorhergehenden Ansprüche, wobei das Verhältnis der Größe des ersten und/ oder zweiten Durchmessers (A) zu der Distanz von der ersten Position zur zweiten Position zwischen 15:1 und 2:1 liegt, bevorzugter zwischen 13:1 und 4:1, bevorzugter zwischen 11:1 und 6:1, oder bevorzugter zwischen 10:1 und 8:1 oder bevorzugt ungefähr 9:1 ist.

4. Ein Steuerrohr (19) nach einem der vorhergehenden Ansprüche, wobei eine äußere Umgebung (29, 30) des ersten und/ oder zweiten Lagers (25, 26) relativ zu dem röhrenförmigen Element befestigt ist und eine innere Umgebung (31, 32) des ersten und/ oder zweiten Lagers (25, 26) relativ zu dem röhrenförmigen Element um die zentrale Achse (D) des Steuerrohrs drehbar ist.

5. Ein Steuerrohr (19) nach einem der vorhergehenden Ansprüche, wobei die zentrale Achse (D) des Steuerrohrs (19), wenn sie auf dem Fahrradrahmen (44) montiert ist, in einem Winkel α von der Vertikalen (C) geneigt ist, so dass die Ebene des ersten und/ oder zweiten Lagers (25, 26) angepasst ist, um die horizontale Ebene des Fahrradrahmens (44) zu schneiden.

6. Ein Steuerrohr (19) nach Anspruch 5, wobei der Winkel α zwischen 1 und 90 Grad von der Vertikalen ist, bevorzugter zwischen 10 und 25 Grad von der Vertikalen, bevorzugter zwischen 15 und 20 Grad von der Vertikalen, bevorzugter zwischen 18 und 19 Grad von der Vertikalen oder ungefähr 18,5 Grad von der Vertikalen ist.

7. Ein Steuerrohr (19) nach einem der vorhergehenden Ansprüche, wobei das Steuerrohr (19) einen ersten verbindenden Teil (21) und einen zweiten verbindenden Teil (22) umfasst, angepasst, um das Steuerrohr mit einem Fahrradrahmen (44) zu verbinden.

8. Ein Steuerrohr (19) nach Anspruch 7, wobei der erste verbindende Teil (21) und der zweite verbindende Teil (22) an gegenüberliegenden Seiten des Steuerrohrs (19) befestigt sind.

9. Ein Steuerrohr (19) nach einem der Ansprüche 7 oder 8, wobei der erste verbindende Teil (21) sich in radiale Richtung von der zentralen Achse (D) des Steuerrohrs (19) erstreckt, und wobei der zweite verbindende Teil (22) sich in eine andere radiale Richtung von der zentralen Achse (D) erstreckt, was dem Steuerrohr (19) erlaubt, an zwei verschiedenen radialen Stellen des Steuerrohrs (19) mit dem Fahrradrahmen (44) verbunden zu sein.

10. Eine Fahrrad Headset-Anordnung umfassend ein Steuerrohr (19) nach den Ansprüchen 1-9, wobei die Headset-Anordnung ferner eine Lenkgabel-Anordnung umfasst, wobei ein proximaler Teil der Lenkgabel-Anordnung an das erste und/ oder das zweite Lager (25, 26) gekoppelt ist und ein distaler Teil der Lenkgabel-Anordnung angepasst ist, um an dem Rad (18) angebracht zu sein.

11. Ein Fahrradrahmen (44), umfassend ein Steuerrohr (19) nach den Ansprüchen 1-9, wobei der Fahrradrahmen (44) ein Lastenfahrradrahmen ist, mit einer zentralen Achse und ein Ladebett (47) umfasst, der eine Achse, die parallel zur zentralen Achse (D) des Steuerrahmens (19) ist, schneidet.

12. Ein Fahrradrahmen (44) nach Anspruch 11, wobei der Fahrradrahmen (44) eine Hauptröhre (4) umfasst, die sich von einer Krubelbox, die angepasst ist, Pedale (11) zu empfangen, erstreckt und in eine erste Hauptröhre (13) und eine zweite Hauptröhre (14) unterteilt, die sich nach außen entgegengesetzt in Querrichtung von der zentralen Achse des Fahrradrahmens (44) erstreckt, wobei die erste und die zweite Hauptröhre ein Ladebett (15) definieren in einer Richtung hin zu einer Vorderseite des Fahrradrahmens (44).

13. Ein Fahrradrahmen (44) nach Anspruch 12, wobei das Steuerrohr (19) in einer Querrichtung zur ersten Hauptröhre (13) und der zweiten Hauptröhre (14) angebracht ist, so dass das Steuerrohr zwischen der ersten Hauptröhre (13) und der zweiten Hauptröhre (14) positioniert ist.

14. Ein Fahrradrahmen (44) nach den Ansprüchen 11-13, wobei der Fahrradrahmen (44) eine Lenkröhre (7) umfasst, die angepasst ist, um Lenkmittel zu empfangen, wobei die Lenkröhre (7) versetzt zur zentralen Achse des Fahrradrahmens (44) ist in Relation zu der Steuerröhre (19), und wobei das Lenkmittel angepasst ist, um mit dem Rad (18) mittels einer mechanischen Verbindung verbunden zu sein.

## Revendications

1. Potence (19) de bicyclette (43) pour fournir un couplage entre un cadre de bicyclette (44) et une roue (18) de la bicyclette (43), la potence (19) comprenant un axe central (D), la potence comprenant :
- un élément tubulaire comprenant un premier bord d'extrémité et un second bord d'extrémité,
- un premier palier (25) ayant un premier diamètre (A),
- un second palier (26) ayant un second diamètre (A),
- le premier palier (25) et le second palier (26) sont adaptés pour assurer une rotation autour de l'axe central (D) de la potence (19),
- le premier palier (25) est disposé dans une première position dans une direction le long de l'axe central (D) où la première position est plus proche du premier bord d'extrémité que du second bord d'extrémité, et le second palier (26) est disposé dans une deuxième position dans une direction le long de l'axe central (D) où la deuxième position est plus proche du second bord d'extrémité que du premier bord d'extrémité,
- **caractérisé en ce que** la taille du premier et / ou second diamètre (A) est supérieure à la distance entre la première position du premier palier (25) et la deuxième position du second palier (26).

2. Potence (19) selon la revendication 1, dans laquelle le premier diamètre (A) et le second diamètre (A) sont sensiblement égaux.

3. Potence (19) selon l'une quelconque des revendications précédentes, dans laquelle le rapport entre la taille du premier et / ou du second diamètre (A) et la distance entre la première position et la deuxième position est compris entre 15:1 et 2:1, plus préférablement entre 13:1 et 4:1, plus préférablement entre 11:1 et 6:1, ou plus préférablement entre 10:1 et 8:1 ou plus préférablement environ 9:1.

4. Potence (19) selon l'une quelconque des revendications précédentes, dans laquelle une périphérie extérieure (29, 30) du premier et / ou du second palier (25, 26) est fixe par rapport à l'élément tubulaire et une périphérie intérieure (31, 32) du premier et / ou du second palier (25, 26) peut tourner par rapport à l'élément tubulaire autour de l'axe central (D) de la potence (19).

5. Potence (19) selon l'une quelconque des revendications précédentes, dans laquelle l'axe central (D) de la potence (19) montée sur un cade de bicyclette (44) est incliné à un angle α par rapport à la verticale (C) de sorte que le plan du premier et / ou du second palier (25, 26) est adapté pour couper un plan horizontal d'un cadre de bicyclette (44).

6. Potence (19) selon la revendication 5, dans laquelle l'angle α est compris entre 1 et 90 degrés par rapport à la verticale, plus préférablement entre 10 et 25 degrés par rapport à la verticale, plus préférablement entre 15 et 20 degrés par rapport à la verticale, plus préférablement entre 18 et 19 degrés par rapport à la verticale, ou environ 18,5 degrés par rapport à la verticale.

7. Potence (19) selon l'une quelconque des revendications précédentes, dans laquelle la potence (19) comprend une première partie de connexion (21) et une seconde partie de connexion (22) adaptées pour connecter la potence à un cadre de bicyclette (44).

8. Potence (19) selon la revendication 7, dans laquelle la première partie de connexion (21) et la seconde partie de connexion (22) sont disposées sur des côtés opposés de la potence (19).

9. Potence (19) selon la revendication 7 ou 8, dans laquelle la première partie de connexion (21) s'étend dans une direction radiale à partir de l'axe central (D) de la potence (19), et la seconde partie de connexion (22) s'étend dans une direction radiale différente à partir de l'axe central (D), permettant la potence (19) à être connectée sur deux côtés radiaux différents de la potence (19) à un cadre de vélo.

10. Ensemble de montage avant pour bicyclette comprenant une potence (19) selon les revendications 1 à 9, dans lequel l'ensemble de montage avant comprend en outre un montage de fourche de direction, où une partie proximale du montage de fourche de direction est couplée au premier et / ou second palier (25, 26) et une partie distale du montage de fourche de direction est adaptée pour être fixée à une roue (18).

11. Cadre de bicyclette (44) comprenant la potence (19) selon les revendications 1 à 9, dans lequel le cadre de bicyclette (44) est un cadre de bicyclette cargo ayant un axe central et comprend un plateau de chargement (47) qui coupe un axe qui est parallèle à l'axe central (D) de la potence (19).

12. Cadre de bicyclette (44) selon la revendication 11, dans lequel le cadre de bicyclette (44) comprend un tube principal (4) qui s'étend depuis une boite de manivelle adaptée pour recevoir des pédales (11) et divisé en un premier tube principal (13) et un second tube principal (14) qui s'étendent vers l'extérieur dans des directions transversales opposées à partir de l'axe central du cadre de bicyclette (44), où le premier tube principal et le second tube principal définissent le plateau de chargement (15) dans une direction vers l'avant du cadre de bicyclette (44).

13. Cadre de bicyclette (44) selon la revendication 12, dans lequel la potence (19) est fixée dans une direction transversale au premier tube principal (13) et au second tube principal (14) de sorte que la potence (14) est positionnée entre le premier tube principal (13) et le second tube principal (14).

14. Cadre de bicyclette (44) selon les revendications 11 à 13, dans lequel le cadre de bicyclette (44) comprend un tube de direction (7) adapté pour recevoir un moyen de direction, où le tube de direction (7) est décalé le long de l'axe central du cadre de bicyclette (43) par rapport à la potence (19), et le moyen de direction est adapté pour être conecté à la roue (18) par l'intermédiaire d'une liaison mécanique.
